# EUROPÄISCHE PATENTSCHRIFT

(11) **EP 1 370 481 B1**
(45) Veröffentlichungstag und Bekanntmachung des Hinweises auf die Patenterteilung: **24.11.2004**
(21) Anmeldenummer: 02711733.2
(22) Anmeldetag: 22.02.2002
(51) Int. Cl.: B65G 69/16, A01F 25/02

(54) **Verfahren zum Verladen und Fördern landwirtschaftlicher Erzeugnisse**
Method for the loading and transport of agricultural products
Procédé pour le chargement et l'acheminement de produits agricoles

(30) Priorität: 23.03.2001 CH 539012001
(43) Veröffentlichungstag der Anmeldung: 17.12.2003
(60) Teilanmeldung: 03015226.8
(73) Patentinhaber: Bucher-Guyer AG, 8166 Niederweningen (CH)
(72) Erfinder: HERTRAMPF, Manfred, 79761 Waldshut-Tiengen (DE)
(86) Internationale Anmeldenummer: PCT/CH2002/000104
(87) Internationale Veröffentlichungsnummer: WO 2002/076862

(56) Entgegenhaltungen:
- EP-A- 1 069 252
- DE-A- 3 840 125
- DE-A- 3 914 702
- DE-U- 29 511 085
- FR-A- 2 175 630
- US-A- 1 862 389
- US-A- 4 320 995
- US-A- 5 704 733
- US-A- 5 797 588
- B.R. TENNES, C.L. BURTON, G.K. BROWN: "A bulk handling and Storing System for Apples" TRANSACTIONS OF THE ASAE, Bd. 21, Nr. 6, 1978, Seiten 1088-1091, XP008004038

## Beschreibung

### TECHNISCHES GEBIET

Die Erfindung betrifft ein Verfahren zum Verladen und Fördern landwirtschaftlicher, lose liegender, schlagempfindlicher Erzeugnisse unter Verwendung einer Silo-Schieber Kombination mit mindestens einer Schwemmrinne zum dosierten Ausschwemmen der Erzeugnisse aus dem Silo.

### STAND DER TECHNIK

Ein Verfahren und eine Vorrichtung ähnlicher Art zur Behandlung landwirtschaftlicher oder gartenbaulicher Produkte ist aus US 5,704,733 (de Greef) bekannt. Dabei werden beispielsweise Tomaten oder Äpfel in mindestens einem Reservoir transportiert. Dieses Reservoir ist mit Wasser gefüllt. Das Wasser hat eine dem Transport dienende Füllhöhe, welche durch die Füllhöhe in mindestens einem Transportweg zwischen einer Zuführung und einer Abführung bestimmt ist. Um den benötigten Transportraum klein zu halten, verwendet das Verfahren eine Stauvorrichtung, welche die Produkte auf einer Füllhöhe staut, welche nicht gleich ist der dem Transport dienenden Füllhöhe. Massnahmen zur schonenden Behandlung grösserer Mengen schlagempfindlicher Früchte sind US 5,704,733 nicht zu entnehmen.

Aus "Transactions of ASAE", Band 21, Nr. 6, Seiten 1088 bis 1091, ist eine Verladungs- und Lagersystem für Äpfel bekannt, mit dem die Früchte von der Ernte bis zum Einlagern behandelt werden können. Die Förderung erfolgt dabei zum Schutz der Früchte mit Hilfe von Wasser.

Aus US-A-4,320,995 ist ein Transportsystem bekannt, das eine hydraulische Fördereinrichtung enthält.

In DE-OS 2,147,783 (Atlas Pacific) ist bereits eine Vorrichtung zum Zuführen von Früchten eines Vorratshaufens zu einem Förderband beschrieben. Diese Vorrichtung umfasst einen ersten Trog zur Aufnahme der Früchte und einer sie tragenden Flüssigkeit und einen zweiten Trog als Vorratsbehälter für die Flüssigkeit. Beide Tröge sind durch einen Überflusskanal miteinander verbunden, um einen maximalen Flüssigkeitsspiegel im ersten Trog aufrecht zu erhalten. Ferner ist ein Rücklauf vorhanden, dessen Einlassöffnung unterhalb eines Förderbandes angeordnet ist, während die Auslassöffnung im zweiten Trog liegt. Eine Pumpvorrichtung pumpt Flüssigkeit aus dem zweiten Trog zu einer Stelle des ersten Troges, die von der Einlassöffnung des Rücklaufes entfernt gelegen ist. Mit dieser Konstruktion wird erreicht, dass Wasser schnell aus dem ersten Trog entweichen kann, wenn eine grosse Menge von Äpfeln innerhalb einer kurzen Zeit in den ersten Trog geschüttet wird. Eine Fördermöglichkeit unter Verzicht auf Förderbänder ist DE-OS 2,147,783 nicht entnehmbar.

Aus US 5,711,509 (Eltec) ist auch schon eine Sperrvorrichtung mit einem Trennschieber bekannt. Die Sperrvorrichtung besitzt eine umlaufende Dichtfläche, und der flüssigkeitsdichte Trennschieber weist eine daran angepasste, an dessen Rand umlaufende Schieberdichtung auf. Die Schieberdichtung ist aufblasbar. Damit kann man den Trennschieber in der Sperrvorrichtung so festlegen, dass immer die aufblasbare Schieberdichtung an der umlaufenden Dichtfläche dicht anliegt. Eine für ein Silo für Früchte geeignete Schieberkonstruktion ist US 5,711,509 nicht entnehmbar.

In Anlagen für die Fruchtsaftgewinnung werden die angelieferten Früchte (Äpfel, Birnen, Zwetschgen, usw.) in Silos geschüttet und anschliessend mit Wasser in einen Schwemmkanal geleitet. Solche Silos haben üblicherweise grosse Öffnungen von etwa 10m mal 10m und sind typisch 5m tief. In ein derartiges Silo werden bis zu 300t Früchte auf einmal eingefüllt. Für die Früchteentnahme weisen solche Silos einseitig am Boden als Schwemmkanal eine Rinne auf, durch die die eingefüllten Früchte mit Wasser mit einer Schwemmtiefe von etwa 0,3m durch eine seitliche Öffnung in einer Silowand ausgeschwemmt und weiter gefördert werden.

Die Dosierung der mit dem Schwemmkanal ausgeschwemmten Früchte erfolgt mit einem beweglichen Schieber-Rechen aussen an einer Silowand, der intervallweise in den Schwemmkanal eingreift. Ist der Schieber-Rechen in Schliesstellung, so fliesst dennoch das Schwemmwasser durch. Ein solches Silo ist nicht flutbar.

In Betrieben für die Fruchtsaft-Herstellung erfolgt die Anlieferung der Früchte typisch mit Lastwagen oder Bahn-Waggons. Beim Abladevorgang werden die Früchte ab Ladehöhe in Früchtesilos der genannten Art von mehreren Metern Tiefe geschüttet. Die meisten Fruchtarten sind druck- und schlagempfindlich, und solche Früchte werden beim Aufprall auf einen Siloboden oder auf andere festliegende Früchte beschädigt. Solche Beschädigungen haben folgende Nachteile:
- Bei längerer Lagerung im Silo tritt an den angeschlagenen Stellen Fäulnis auf.
- Abgeschlagene Fruchtteile gehen mit dem Schwemmwasser verloren.
- Durch den direkten Kontakt beschädigter Fruchtflächen mit dem Schwemmwasser wird Fruchtzucker gelöst und geht verloren.
- Das Schwemmwasser wird durch Fruchtzucker und Fruchtteile belastet und erfordert einen grösseren Entsorgungsaufwand.
- Die Saftausbeute aus der angelieferten Fruchtmenge wird durch die Verluste kleiner.
- Die Pressbarkeit beschädigter Früchte verschlechtert sich mit der Folge von Leistungs- und Ausbeuteverlusten.

Ein Fluten ganzer Silos mit bekannten Vorrichtungen der oben genannten Art wäre für Betriebe der Fruchtsaftgewinnung sehr nachteilig. Der Wasserverbrauch wäre enorm, und die Abwasserbelastung wäre sehr hoch, eine Wirtschaftlichkeit ist damit fraglich. Dies trifft besonders zu für viele Verarbeitungsländer, in denen Wasserknappheit herrscht. Die Früchte verbleiben dort oft tagelang in den Silos, wodurch die genannten Nachteile sich noch vergrössern würden. Ausserdem könnten mit Wasser gefüllte Silos weniger Früchte aufnehmen, als Silos ohne Wasser.

### DARSTELLUNG DER ERFINDUNG

Ausgehend von dem oben genannten Stand der Technik liegt der Erfindung die Aufgabe zugrunde, ein Verfahren zum Verladen und Fördern landwirtschaftlicher Erzeugnisse in Grossilos bis zu ca. 300t Fassungsvolumen der Fruchtsaftindustrie anzugeben, wobei die oben angegebenen Nachteile und Probleme wesentlich reduziert sind.

Die Erfindung ist durch die Merkmale des Anspruchs 1 gegeben. Vorteilhafte Ausgestaltungen und Weiterbildungen sind durch die Merkmale der abhängigen Ansprüche gegeben.

Demgemäss zeichnet sich das Verfahren zum Verladen und Fördern landwirtschaftlicher Erzeugnisse der eingangs genannten Art dadurch aus, dass vor dem Einfüllen der Erzeugnisse in den Silo der Silo mit Wasser nur soweit gefüllt wird, dass die Fallbewegung der Erzeugnisse in den Silo hinreichend abgedämpft wird, dass dann die Erzeugnisse in einer benötigten Menge bis weit über den vorhandenen Wasserspiegel hinaus in den Silo eingefüllt werden, dass anschliessend das in den Silo eingefüllte Wasser alsbald aus dem Silo entfernt wird, und dass erst zum Zeitpunkt der dosierten Entnahme der Erzeugnisse aus dem Silo eine geeignete Schwemmwasser-Menge zugeführt wird, um die Erzeugnisse durch die Schwemmrinne unter Verwendung einer Schieber-Kombination abzuführen.

Gemäss einer besonders bevorzugten Ausgestaltung des erfindungsgemässen Verfahrens wird bei einem Silo von etwa 5m Tiefe der Silo vor dem Einfüllen der Erzeugnisse bis etwa 1m Höhe mit Wasser aufgefüllt.

Die Silo-Schieber Kombination zum Verladen und Fördern landwirtschaftlicher Erzeugnisse der eingangs genannten Art zeichnet sich aus durch eine Schwemmrinne, welche eine Wand des Silos mittels einer Öffnung durchdringt und durch einen aussenseitig der Silowand an der Öffnung angeordneten, vertikal verschieblichen Verschlusschieber für die Öffnung, welcher sich in der Schliesslage vertikal mindestens bis zu der erforderlichen Wasser-Füllhöhe des Silos erstreckt.

Gemäss einer Ausgestaltung der Silo-Schieber-Kombination ist ein Verschlusschieber für die Öffnung vorhanden, welcher in einem Abstand zur Silowand, an seinem Aussenrand abdichtbar in einem Führungsprofil geführt ist, wobei das Führungsprofil an der Silowand dicht anliegt, derart, dass zwischen dem Verschlusschieber und der Silowand ein Zwischenraum besteht, welcher am oberen Ende des Verschlusschiebers offen ist und am unteren Ende durch die Öffnung in der Silowand mit dem Innenraum des Silos in Verbindung steht.

Weitere Ausführungsformen und Vorteile der Erfindung ergeben sich durch die in den Ansprüchen ferner aufgeführten Merkmale, sowie durch die nachstehend angegebenen Ausführungsbeispiele. Die Merkmale der Ansprüche können in beliebiger Weise miteinander kombiniert werden, soweit sie sich nicht offensichtlich gegenseitig ausschliessen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung entnehmbaren Merkmale können einzeln für sich oder zu mehreren in beliebiger Kombination erfindungsgemäss angewandt werden. Es zeigen:
Fig. 1a und Fig. 1b eine schematische Schnittdarstellung einer bekannten Silo-Schieber Kombination,
Fig. 2a und Fig. 2b eine schematische Schnittdarstellung einer Silo-Schieber-Kombination,
Fig. 3 ein Detail der Silo-Schieber Kombination gemäss Fig. 2b,
Fig. 4 eine schematische Schnittdarstellung einer Schwemmrinne, in welche der Schieber der Kombination gemäss Fig. 2a eingreift,
Fig. 5a eine schematische Schnittdarstellung eines Führungsprofiles mit Schieber, in welchem der Schieber der Kombination gemäss Fig. 2a geführt ist,
Fig. 5b eine schematische Schnittdarstellung einer aufblasbaren elastischen Dichtung mit nach innen gestülpter Dichtfläche eines Schiebers gemäss Fig. 5a,
Fig. 6 eine schematische Schnittdarstellung einer Variante der Schwemmrinne gemäss Fig. 4 mit einer in deren Wand angeordneten Dichtung für den Schieber,
Fig. 7 eine schematische Schnittdarstellung einer Variante des Führungsprofiles gemäss Fig. 5a mit einer darin angeordneten Dichtung, welche die Dichtung gemäss Fig. 6 fortsetzt,
Fig. 8 in einer schematischen Schnittdarstellung eine Gesamtansicht der Silo-Schieber-Kombination,
Fig. 9 ein Zeitdiagramm für den Wasserpegel und die Lage der Unterkante eines Schieber-Rechens in einer Schwemmrinne einer bekannten Silo-Schieber-Kombination gemäss Fig. 1a und Fig. 1b, und
Fig. 10 ein Zeitdiagramm für den Wasserpegel und die Lage der Unterkante eines Silo-Schiebers in einer Schwemmrinne der Silo-Schieber-Kombination gemäss Fig. 2a und Fig. 2b.

### WEGE ZUM AUSFÜHREN DER ERFINDUNG

### Aufbau bevorzugter Ausführungsbeispiele

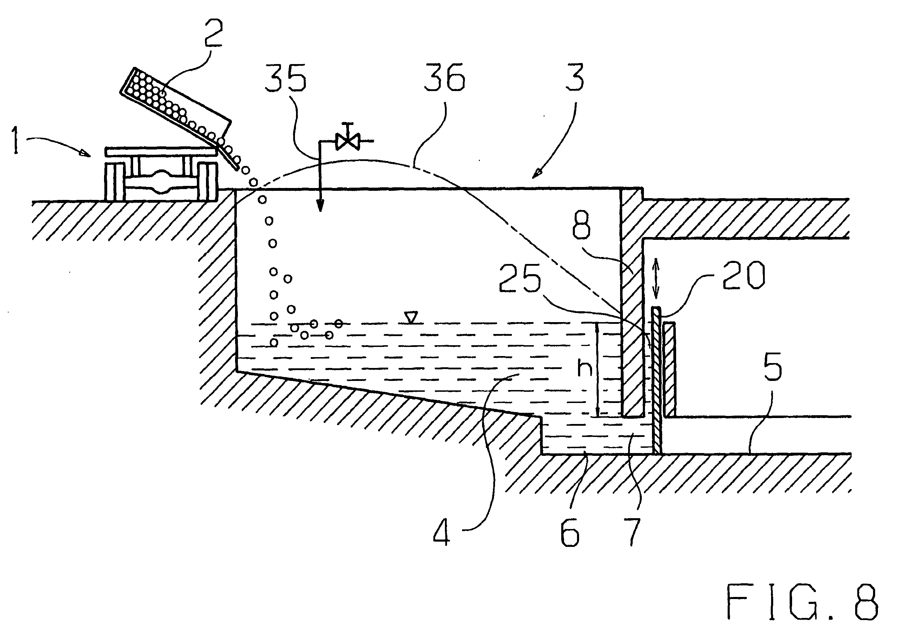

Fig. 8 zeigt in einer schematischen Schnittdarstellung eine Gesamtansicht einer Silo-Schieber-Kombination, wie sie in Anlagen für die Fruchtsaftgewinnung verwendet werden soll. In einem Lastwagen 1 erfolgt die Anlieferung der Früchte 2 (Äpfel, Birnen, Zwetschgen, usw.), welche in ein Silo 3 geschüttet und anschliessend in an sich bekannter Art mit Wasser 4 in eine Schwemmrinne 5 geleitet werden. Solche Silos haben üblicherweise grosse Öffnungen von etwa 10m mal 10m und sind typisch 5m tief. In ein derartiges Silo werden bis zu 300t Früchte auf einmal eingefüllt. Für die Früchteentnahme weisen solche Silos einseitig am Boden als Schwemmkanal eine Rinne 6 auf, durch die die eingefüllten Früchte 2 mit dem Wasser 4 mit einer Schwemmtiefe von etwa 0,3m durch eine seitliche Öffnung 7 in einer Silowand 8 ausgeschwemmt und weiter gefördert werden.

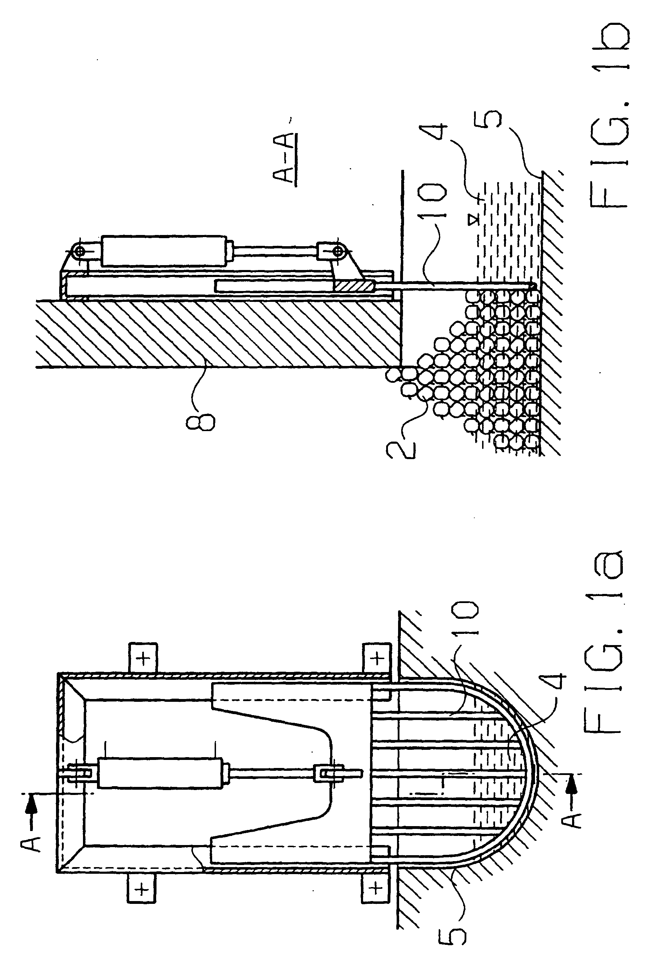

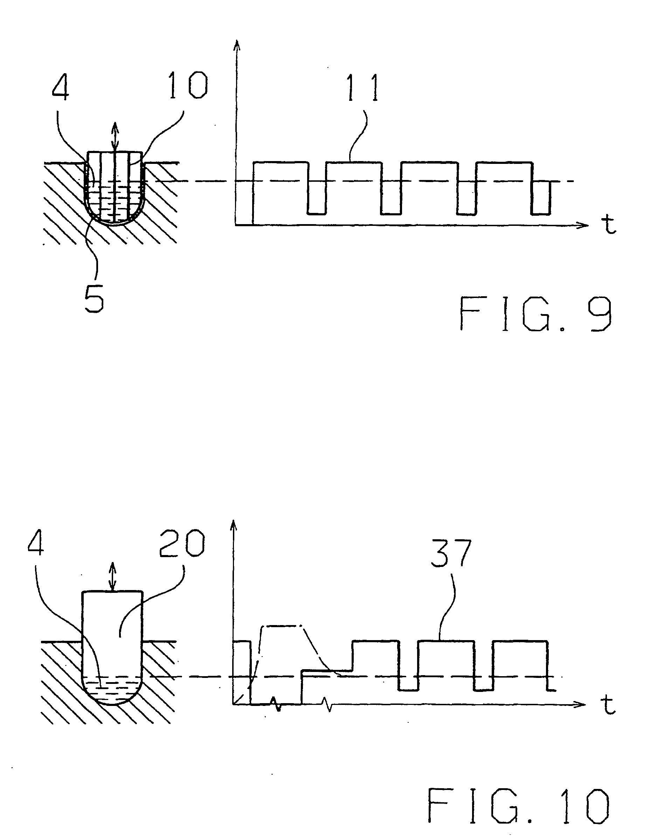

In Fig. 8 ist das Wasser 4 über die Schwemmtiefe hinaus erfindungsgemäss bis zu einer Höhe h aufgefüllt, damit die Fallbewegung der Früchte 2 hinreichend abgedämpft wird. Ein solches Fluten ist bei einem bekannten Silo nicht durchführbar, weil die Dosierung der mit der Schwemmrinne 5 ausgeschwemmten Früchte 2 mit einem bekannten beweglichen Schieber-Rechen 10 aussen an der Silowand 8 erfolgt, wie er in Fig. 1a und 1b gezeigt ist. Dabei greift der Schieber-Rechen 10 intervallweise in die Schwemmrinne 5 ein, wie es der zeitliche Verlauf 11 in Fig. 9 zeigt. Ist der Schieber-Rechen 10 in Schliesstellung, so fliesst dennoch das Schwemmwasser 4 durch den Rechen 10 hindurch. Ein solches Silo ist also nicht flutbar.

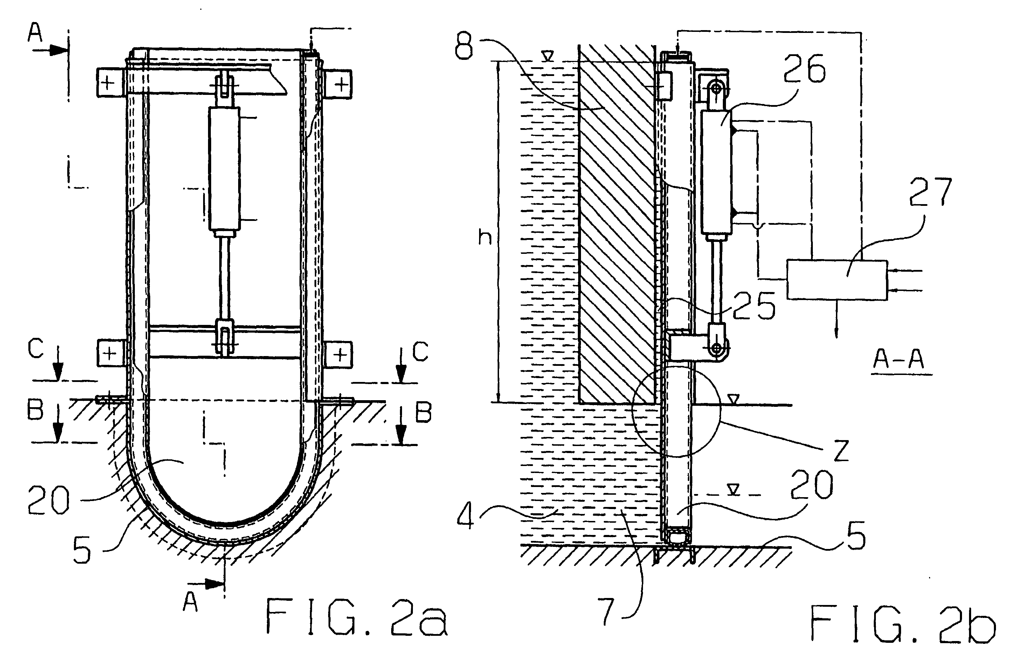

Das erwähnte Fluten des Silos 3 bis zu einer erforderlichen Höhe h wird ermöglicht durch eine Silo-Schieber Kombination, wie sie die schematischen Schnittdarstellungen der Fig. 2a und Fig. 2b zeigen. Anstelle des Schieber-Rechens 10 gemäss Fig. 1a, 1b, ist gemäss Fig. 2a, 2b ein über seine ganze Fläche dichter Schieber 20 eingesetzt. Die Anordnung des Schiebers 20 im Silo 3 mit der Silowand 8 und der Schwemmrinne 5 zeigt Fig. 8, und sie entspricht jener des Rechens 10 gemäss Fig. 1a, 1b. Wie die Fig. 2a, 2b, 8 zeigen, erstreckt sich der vertikal verschiebliche Schieber 20 vertikal so weit, dass er in seiner gezeigten Schliesstellung das Wasser 4 noch bis zu der Höhe h im Silo 3 zurückhalten kann.

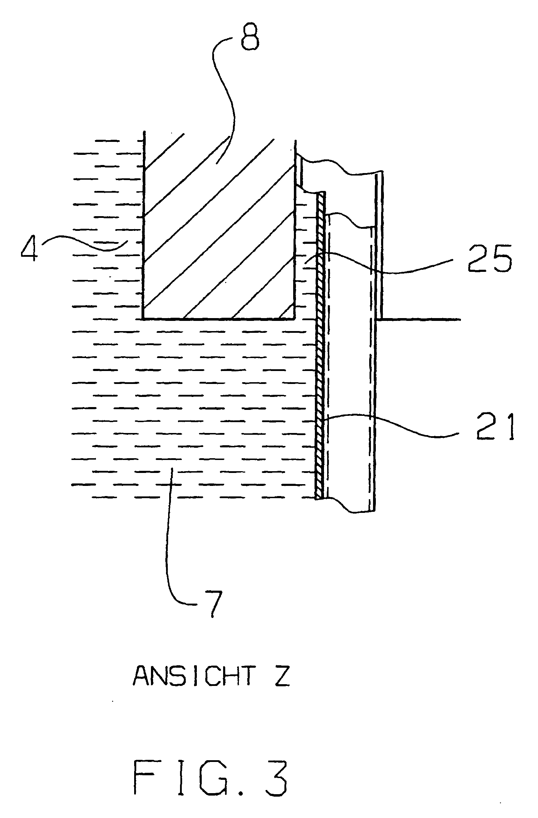

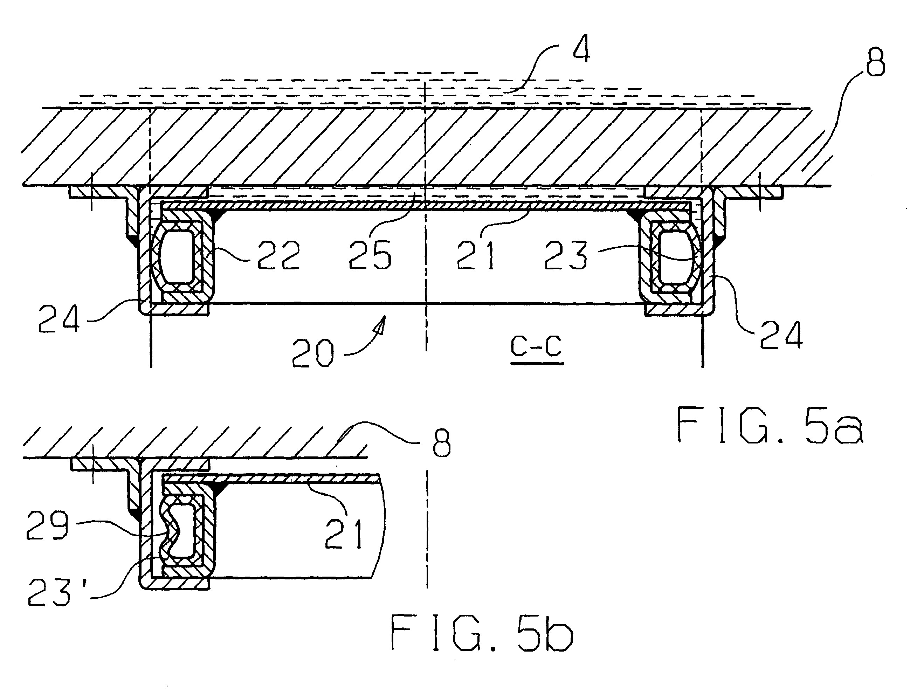

Wie insbesondere Fig. 5a in einer Schnittansicht längs der Linie C-C in Fig. 2a zeigt, umfasst der Schieber 20 eine Grundplatte 21, welche längs ihres Aussenrandes ein Profil 22 zur Aufnahme einer aufblasbaren elastischen Dichtung 23 trägt. Der Schieber 20 ist in einem an der Silowand 8 dicht angebrachten Führungsprofil 24 vertikal so geführt, dass zwischen der Grundplatte 21 und der Silowand 8 ein Zwischenraum 25 frei bleibt. Wie insbesondere Fig. 2b und 3 zeigen, steht der Zwischenraum 25 unten über die seitliche Öffnung 7 in der Silowand 8 mit dem Innenraum des Silos 3 in Verbindung und ist am oberen Ende des Schiebers 20 offen, sodass das Wasser 4 aus dem Silo 3 auch aussenseitig der Silowand 8 bis zur Höhe h steigen kann, ohne in die Schwemmrinne 5 auszufliessen. Fig. 5b zeigt eine handelsübliche Variante der aufblasbaren elastischen Dichtung 23', welche eine im dargestellten nicht aufgeblasenen Zustand sich nach innen einstülpende Dichtfläche 29 aufweist. Bei einer einfachen Dichtung 23 gemäss Fig. 5a kann man eine ähnliche Form auch durch Absaugen der Luft in der Dichtung erreichen.

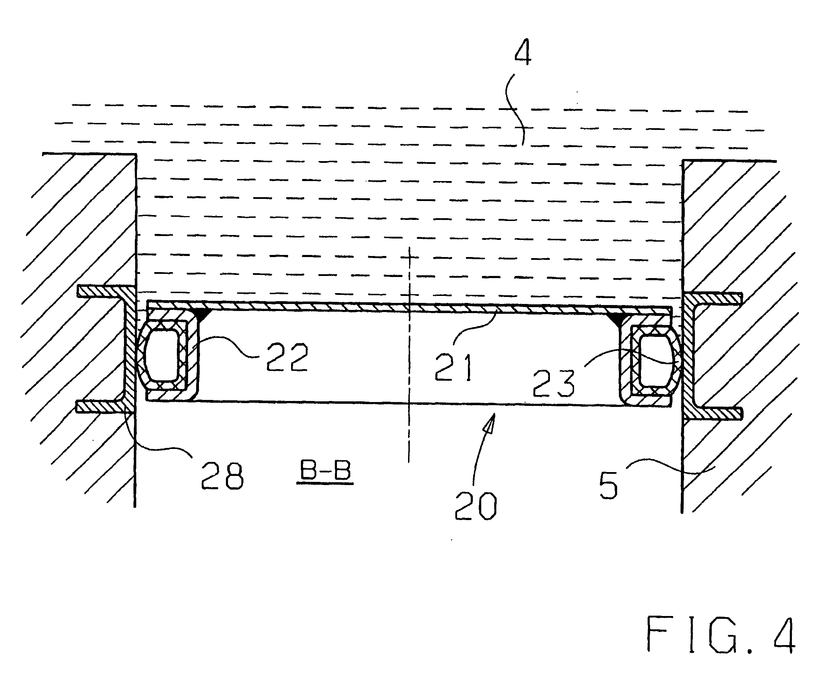

Fig. 2b zeigt weiterhin einen pneumatischen Zylinder 26 zur vertikalen Verschiebung des Schiebers 20 mit Hilfe einer Steuerstufe 27, welche ausserdem die aufblasbare Dichtung 23 beaufschlagt. Fig. 4 zeigt in einer Schnittansicht längs der Linie B-B der Fig. 2a die Fortsetzung der Dichtung 23 am Schieber 20 im Bereich der Schwemmrinne 5. In die Wand der Schwemmrinne 5 ist bündig ein Profil 28 eingelassen, welches an die Form des Schiebers 20 angepasst ist und gegen die Dichtung 23 abdichtet. Das Profil 28 setzt also das Führungsprofil 24 an der Silowand 8 nach unten fort.

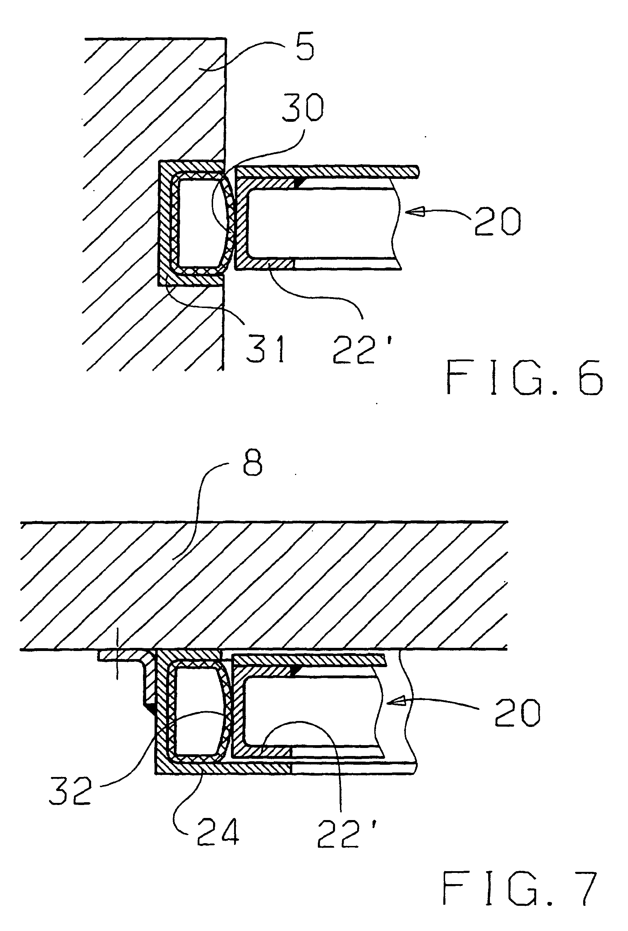

Die Fig. 6 und 7 zeigen den Fig. 4 und 5a entsprechende Varianten der Dichtung 23 des Schiebers 20. Gemäss Fig. 6 ist eine aufblasbare Dichtung 30 mittels eines Profiles 31 in die Schwemmrinne 5 stationär eingelassen. Das mit der Dichtung 30 zusammenwirkende Profil 22' des Schiebers 20 dient in diesem Falle nur als Gegenstück und weist keine eigene elastische Dichtung auf. Fig. 7 zeigt die Fortsetzung des Profiles 22' oberhalb der Schwemmrinne 5. Hierbei steht dem Profil 22' eine in dem Führungsprofil 24 für den Schieber 20 stationär angeordnete aufblasbare Dichtung 32 gegenüber. Der Vorteil der Ausführung gemäss Fig. 6 und 7 ist, dass eine Luftzuleitung für die aufblasbaren stationären Dichtungen 30, 32 stationär verlegt werden kann.

### Verwendung bevorzugter Ausführungsbeispiele

Die Verwendung der soweit beschriebenen Silo-Schieber Kombinationen zum Verladen und Fördern von Früchten wird anhand der Fig. 8 und 10 gezeigt. Vor dem Einfüllen der Früchte 2 aus dem Lastwagen 1 in den Silo 3 wird der Schieber 20 in seine in Fig. 8 dargestellte Schliesslage gefahren, und die aufblasbaren Dichtungen werden betätigt. Anschliessend wird das Wasser 4 mittels einer Leitung 35 bis zu der Höhe h aufgefüllt, damit die Fallbewegung der Früchte 2 hinreichend abgedämpft wird. Danach werden die Früchte bis maximal zu einer Füllinie 36 eingefüllt, welche weit über den Wasserspiegel in der Höhe h hinausragt. Fig. 10 zeigt das zugehörige Zeitdiagramm 37 für die Lage der Unterkante des Schiebers 20.

Nach dem Fluten des Silos 3 bis zur Höhe h und dem Einfüllen der Früchte unter Überlauf überschüssigen Wassers 4 über die Oberkante des Schiebers 20 wird alsbald der Schieber 20 mittels des pneumatischen Zylinders 26 und der Steuerstufe 27 intervallweise zum Fördern der Früchte 2 in die Schwemmrinne 5 geöffnet, wobei der Wasserspiegel im Silo 3 bis auf einen Schwemmpegel von etwa 0,3m absinkt. Gleichzeitig wird über die Leitung 35 eine ausreichende aber geringe Menge Schwemmwasser nachgefüllt. In dieser Intervallphase können im abgesenkten Zustand des Schiebers 20 die Dichtungen aufgeblasen sein oder nicht. Sie dienen hauptsächlich zum Fluten des Silos 3.

Die untere Hubstellung des Schiebers 20 ist einstellbar. Wie Fig. 8 zeigt, ist während dem Fluten des Silos 3 mittels der Leitung 35 der Schieber 20 in der Rinne 6 ganz geschlossen. Im Dosierprozess schliesst, wie das Zeitdiagramm 37 der Fig. 10 zeigt, der Schieber 20 nicht vollständig, damit die darunter zwischen Schieber 20 und Rinne 6 liegenden Früchte nicht beschädigt werden. Die Zeitdauern des geschlossenen und des offenen Intervalles gemäss dem Zeitdiagramm 37 sind getrennt zwischen 1 sec. und 10 sec. voreinstellbar. Bei geeigneter Einstellung der Menge des Schwemmwassers mit der Leitung 35 kann man erreichen, dass die Früchte 2 nur einlagig in die Schwemmrinne 5 abgefördert werden.

In bekannten Verarbeitungsbetrieben für Früchte sind in den meisten Fällen mehrere Früchtesilos nebeneinander plaziert. Die Entleerung der Silos erfolgt unter vollautomatischer Steuerung. Mittels Lichtschranken wird ermittelt, ob ein Silo leer ist. In einem solchen Fall wird die Entleerung automatisch auf ein nächstes Silo umgeschaltet. Beim oben beschriebenen, erfindungsgemässen Verfahren wird die erforderliche Wassermenge für das Fluten über eine Niveausonde erfasst, und die Schwemmwasser-Menge wird über Drosselventile oder über Regelventile mit Durchflussmesser vorgegeben.

### Bezugszeichenliste

- 1: Lastwagen
- 2: Früchte
- 3: Silo
- 4: Wasser
- 5: Schwemmrinne
- 6: Rinne (Silo)
- 7: Öffnung (Silowand)
- 8: Silowand
- 10: Schieber-Rechen
- 11: zeitlicher Verlauf
- 20: Schieber
- 21: Grundplatte (Schieber)
- 22: Profil (Schieber)
- 22': Profil (Schieber)
- 23: Dichtung (Schieber)
- 23': Dichtung (Schieber)
- 24: Führungsprofil
- 25: Zwischenraum
- 26: pneumatischer Zylinder
- 27: Steuerstufe
- 28: Profil (Schwemmrinne)
- 29: Dichtfläche
- 30: Dichtung (Schwemmrinne)
- 31: Profil (Schwemmrinne)
- 32: Dichtung (Profil 24)
- 35: Leitung (Silo)
- 36: Füllinie (Früchte)
- 37: Zeitdiagramm
- h: Füllhöhe des Wassers

## Patentansprüche

1. Verfahren zum Verladen und Fördern landwirtschaftlicher, lose liegender, schlagempfindlicher Erzeugnisse (2) unter Verwendung einer Silo-Schieber Kombination mit mindestens einer Schwemmrinne (5) zum dosierten Ausschwemmen der Erzeugnisse (2) aus dem Silo (3), **dadurch gekennzeichnet, dass** vor dem Einfüllen der Erzeugnisse (2) in den Silo (3) der Silo (3) mit Wasser (4) nur soweit gefüllt wird, dass die Fallbewegung der Erzeugnisse (2) in den Silo hinreichend abgedämpft wird, dass dann die Erzeugnisse (2) in einer benötigten Menge bis weit über den vorhandenen Wasserspiegel hinaus in den Silo (3) eingefüllt werden, dass anschliessend das in den Silo (3) eingefüllte Wasser (4) alsbald aus dem Silo (3) entfernt wird, und dass erst zum Zeitpunkt der dosierten Entnahme der Erzeugnisse (2) aus dem Silo (3) eine geeignete Schwemmwasser-Menge zugeführt wird, um die Erzeugnisse (2) durch die Schwemmrinne (5) unter Verwendung der Schieber-Kombination abzuführen.

2. Verfahren nach Anspruch 1, **dadurch gekennzeichnet, dass** bei einem Silo (3) von etwa 5m Tiefe der Silo (3) vor dem Einfüllen der Erzeugnisse (2) bis etwa 1m Höhe mit Wasser (4) aufgefüllt wird.

3. Verfahren nach Anspruch 1, **dadurch gekennzeichnet, dass** die Erzeugnisse (2) aus dem Silo (3) durch die Schwemmrinne (5) mit Schwemmwasser (4) durch intervallweises Öffnen und Schliessen der Silo-Schieber Kombination intervallweise abgeführt werden.

## Claims

1. Method of loading and conveying loose agricultural products (2) sensitive to impact using a silo/sliding gate combination comprising at least one flume (5) for the metered flushing of the products (2) out of the silo (3), **characterised in that**, before the products (2) are fed into the silo (3), the silo (3) is filled with water (4) only to such an extent that the falling movement of the products (2) into the silo is sufficiently damped, that the products (2) are then fed into the silo (3) in a required quantity to far beyond the existing water level, that the water (4) fed into the silo (3) is then immediately removed from the silo (3) and that only at the point of the metered removal of the products (2) from the silo (3) is a suitable quantity of flume water supplied in order to discharge the products (2) through the flume (5) using the sliding gate combination.

2. Method according to claim 1, **characterised in that**, in the case of a silo (3) having a depth of approximately 5 m, the silo (3) is filled up with water (4) to a level of approximately 1 m before the products (2) are fed in.

3. Method according to claim 1, **characterised in that** the products (2) are discharged at intervals from the silo (3) through the flume (5) with the aid of flume water (4) by opening and closing the silo/sliding gate combination at intervals.

## Revendications

1. Procédé pour le chargement et l'acheminement de produits agricoles (2) reposant en vrac et sensibles aux chocs, en utilisant une combinaison d'un silo et d'une porte coulissante comportant au moins un caniveau (5) destiné à l'évacuation dosée des produits (2) hors du silo (3), **caractérisé par le fait que**, avant que lesdits produits (2) soient déversés dans le silo (3), ledit silo (3) est empli d'eau (4) uniquement de telle sorte que le mouvement de chute des produits (2) dans le silo (3) soit suffisamment amorti ; **par le fait que** lesdits produits (2) sont ensuite déversés dans ledit silo (3) en une quantité nécessaire, bien au-delà du niveau d'eau présent ; **par le fait que** l'eau (4), déversée dans le silo (3), est ensuite aussitôt évacuée dudit silo (3) ; et **par le fait qu'**une quantité appropriée d'eau d'évacuation n'est délivrée qu'à l'instant du prélèvement dosé des produits (2) hors du silo (3), afin d'évacuer lesdits produits (2) par l'intermédiaire du caniveau (5), en utilisant la combinaison impliquant une porte coulissante.

2. Procédé selon la revendication 1, **caractérisé par le fait que**, en présence d'un silo (3) d'une profondeur d'environ 5 m, ledit silo (3) est empli d'eau (4) jusqu'à une hauteur d'environ 1 m préalablement au déversement des produits (2).

3. Procédé selon la revendication 1, **caractérisé par le fait que** les produits (2) sont évacués du silo (3) par intervalles, à l'aide du caniveau (5) et avec utilisation d'eau d'évacuation (4), en ouvrant et en fermant par intervalles la combinaison du silo et de la porte coulissante.
